# EUROPEAN PATENT SPECIFICATION

(11) **EP 3 093 181 B1**
(45) Date of publication and mention of the grant of the patent: **26.12.2018**
(21) Application number: 16168695.1
(22) Date of filing: 09.05.2016
(51) Int. Cl.: B60K 35/00, B60K 37/02

(54) **VEHICULAR DISPLAY DEVICE**
FAHRZEUGANZEIGEVORRICHTUNG
DISPOSITIF D'AFFICHAGE POUR VÉHICULE

(30) Priority: 11.05.2015 JP 2015096650
(43) Date of publication of application: 16.11.2016
(73) Proprietor: Honda Motor Co., Ltd., Minato-ku Tokyo 107-8556 (JP)
(72) Inventor: KURITA, Yasuhiro, Nagaoka-shi,, Niigata (JP); SATO, Atsuki, Wako-shi,, Saitama 3510193 (JP); KATAOKA, Yuichi, Wako-shi,, Saitama 3510193 (JP)
(74) Representative: TBK

(56) References cited:
- JP-A- 2001 281 001
- US-A1- 2008 204 268
- US-A1- 2011 043 348
- US-A1- 2011 137 519
- US-B1- 7 750 821

## Description

### BACKGROUND OF THE INVENTION

### Field of the Invention

The present invention relates to a vehicular display device including a liquid crystal display panel.

### Description of the Conventional Art

Various modes of vehicular display devices have been known (refer, for example, to patent document 1 (Figs. 1 and 2) and patent document 2 (Figs. 3 and 4)).

A description will be given of the patent document 1 with reference to the following drawings.

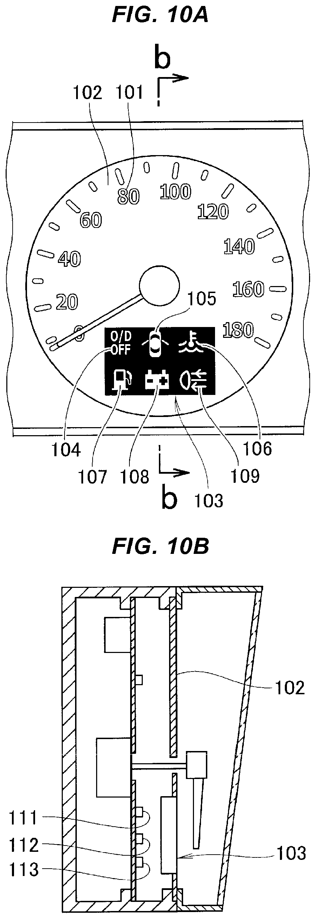

Figs. 10A and 10B are views describing a basic principle of a prior art, in which Fig. 10A is a front elevational view and Fig. 10B is a cross-sectional view along a line b-b in Fig. 10A.

As shown in Fig. 10A, a liquid crystal panel 103 is fitted into an indicator panel 102 on which characters 101 are arranged. The liquid crystal panel 103 is provided with various warning lights 104 to 109, and the warning lights 104 to 109 are selectively displayed.

As shown in Fig. 10B, a yellow light emitting device 111, a red light emitting device 112 and a green light emitting device 113 are provided at the back of the liquid crystal panel 103. Any one of these light emitting devices 111 to 113 is lighted.

The warning light 104 and the warning light 107 are lighted into yellow by the yellow light emitting device 111. The warning light 105, the warning light 106 and the warning light 108 are lighted into red by the red light emitting device 112. The warning light 109 is lighted into green by the green light emitting device 113 (paragraph 0022 in patent document 1).

Since any one of the light emitting devices 111 to 113 is lighted, a colorful display can not be achieved. For example, the warning light 109 can not be displayed into green at the same time of the red display of the warning light 106. In other words, the colorful display can not be achieved.

Further, illuminating lights of the light emitting devices 111 to 113 are attenuated their luminance during passage through the liquid crystal panel 103. Therefore, even in the case that it is necessary to display the warning lights 105, 106 and 108 with high luminance, the display with the high luminance can not be achieved. If the luminance is low, the light may be hard to be viewed under sun light.

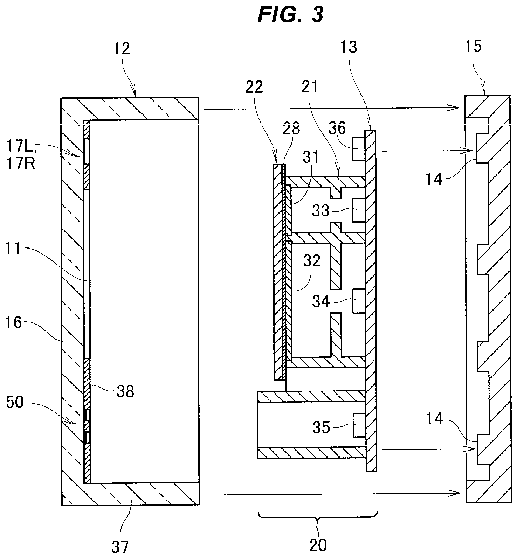

As shown in Fig. 3 of the patent document 2, a vehicular display device (30) (parenthetic numeric character denotes sign described in the patent document 2, same applies to the below) is provided with a liquid crystal speed meter (36) in a left side as seen from a driver, and is provided with a tachometer (37) in a right side. The left liquid crystal speed meter (36) is provided with a warning display portion (51) for the water temperature rise of the radiator and the fuel consumption information.

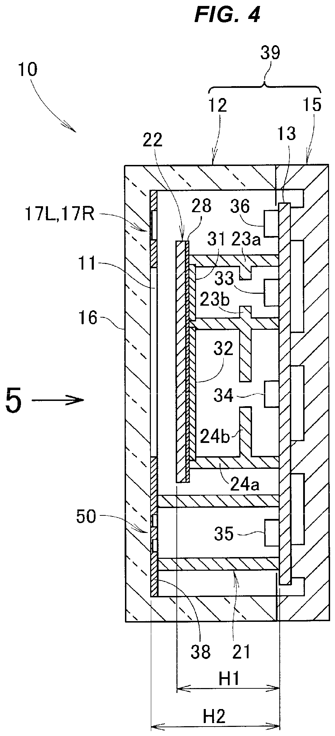

As shown in Fig. 4 of the patent document 2, a light guide plate (42) is provided on a rear face of the liquid crystal speed meter (36), and a multicolor light emitting diode (43) is arranged in one end of the light guide plate (42). The multicolor light emitting diode (43) is provided with a light emitting chip (56) which emits green light, and a light emitting chip (57) which emits red light. One of the green light emitting chip (56) and the red light emitting chip (57) can be selected by a drive circuit (44).

One warning display portion or a plurality of warning display portions is or are displayed into green among six warning display portions (51) which are illustrated in Fig. 3 of the patent document 2. Alternatively, one warning display portion or a plurality of warning display portions is or are displayed into red among the illustrated six warning display portions (51).

However, one of six warning display portions (51) can not be displayed into red while the other one thereof is displayed into green. In other words, the colorful display can not be achieved.

Further, the illuminating light of the multicolor light emitting diode (43) is attenuated its luminance during the passage through the liquid crystal speed meter (36). Therefore, even in the case that it is necessary to display the warning display portion (51) with the high luminance, the warning display portion can not be displayed with high luminance. If the luminance is low, the light may be hard to be viewed under sun light.

In both of the technique disclosed in the patent document 1 and the technique disclosed in the patent document 2, the colorful display can not be achieved, and the warning display is hard to be viewed under sun light.

Together with enhancement of required performance, there is demanded an automotive display device which can achieve a colorful display and can achieve a warning display easily viewed even under sun light.

### PRIOR ART DOCUMENT

### Patent Documents

Patent Document 1: Japanese Unexamined Patent Publication No. JP 2004-226364 A
Patent Document 2: Japanese Unexamined Patent Publication No. JP 2001-281001 A
Patent Document 3: US 2011/137519 A

US 2011/137519 A discloses a vehicular display device having the features of the preamble of claim 1.

### SUMMARY OF THE INVENTION

The invention according to Claim 1 of the present invention is a vehicular display device comprising:
a housing;
a liquid crystal display panel which is housed in the housing; and
a circuit board which is housed in the housing,
wherein the circuit board is provided with a first light emitting device which can emit light with multiple colors, a second light emitting device which emits light with a single color, and a third light emitting device which emits light with a single color,
wherein the liquid crystal display panel is provided with a semi-transmissive and semi-reflective film, and has a first segment display portion which is transmitted and illuminated by the first light emitting device, and a second segment display portion which is transmitted and illuminated by the second light emitting device, and
wherein the housing has a warning display portion which is transmitted and illuminated by the third light emitting device.

### Problem to be Solved by the Invention

The present invention aims at provision of an automotive display device which can achieve a colorful display and can achieve a warning display easily viewed even under sun light.

### Means for Solving the Problem

The invention is described in claim 1.

The invention according to Claim 2 of the present invention is the vehicular display device described in Claim 1, wherein the first segment display portion indicates a rotating speed of an engine, and the second segment display portion indicates a speed of the vehicle.

The invention according to Claim 3 of the present invention is the vehicular display device described in Claim 1 to Claim 2, wherein the vehicular display device is provided in a saddle riding type vehicle.

The invention according to Claim 4 of the present invention is the vehicular display device described in Claim 3, wherein the vehicular display device is provided in a forward side of a steering handle of the saddle riding type vehicle and a rearward side of a wind screen.

The invention according to Claim 5 of the present invention is the vehicular display device described in Claim 3 or Claim 4, wherein the vehicular display device is provided with a small shield over motorcycle gauges which prevents direct projection of sun light.

The invention according to Claim 6 of the present invention is the vehicular display device described in Claim 1, wherein the circuit board further comprises a fourth light emitting device which emits light with a single color, the housing further has a direction display portion which is transmitted and illuminated by the fourth light emitting device, the second light emitting device is arranged at a lower position of the first light emitting device, the third light emitting device is arranged at a lower position of the second light emitting device, and the fourth light emitting device is arranged at an upper position of the first light emitting device.

The invention according to Claim 7 of the present invention is the vehicular display device described in Claim 1, wherein the liquid crystal display panel having the first segment display portion and the second segment display portion is arranged between the circuit board and the warning display portion.

### Effect of the Invention

In the invention according to Claim 1, the second segment display portion can be displayed with a different color from that of the first segment display portion at the same time of the multicolor display in the first segment display portion, resulting in achievement of the colorful display. Further, sun light is reflected on the basis of a reflecting action of the semi-transmissive and semi-reflective film. In addition, the warning display portion is illuminated directly by the third light emitting device via no liquid crystal display panel, and the display with high luminance is maintained. Therefore, according to Claim 1, there can be provided an automotive display device which can achieve the colorful display, and can achieve the warning display easily viewed even under sun light.

In the invention according to Claim 2, the first segment display portion indicates the rotating speed of the engine, and the second segment display portion indicates the speed of the vehicle.

Since the first segment display portion can display with the multiple colors, the first segment display portion can display with red color when the rotating speed reaches a so-called red zone region, and display with safety color in the other regions than the red zone. As a result, usability is improved.

On the other hand, since the second segment display portion displays the speed of the vehicle, the second segment display portion is sufficient with the single color, and the light emitting device can be made inexpensive by the single color display.

In the invention according to Claim 3, the vehicular display device is provided in the saddle riding type vehicle. The saddle riding type vehicle can mount thereon the vehicular display device which can achieve the colorful display and can achieve the warning display easily viewed even under sun light.

In the invention according to Claim 4, the vehicular display device is provided in the forward side of the steering handle of the saddle riding type vehicle and the rearward side of the wind screen. The vehicular display device is arranged in a place which is easily viewed by a driver.

In the invention according to Claim 5, the vehicular display device is provided with the small shield over motorcycle gauges which prevents the direct projection of sun light. Since the sun light can be shielded or attenuated by the small shield over motorcycle gauges, and a sun light countermeasure can be enforced, it is possible to further enhance the visibility of the warning display portion.

In the invention according to Claim 6, the circuit board further is provided the fourth light emitting device which emits light with the single color, and the housing further has the direction display portion which is transmitted and illuminated by the fourth light emitting device. Since the direction display portion is illuminated directly by the fourth light emitting device via no liquid crystal display portion, and the high luminance display is maintained, the visibility of the direction display portion is improved even under sun light.

Further, the second light emitting device is arranged at the lower position of the first light emitting device, the third light emitting device is arranged at the lower position of the second light emitting device, and the fourth light emitting device is arranged at the upper position of the first light emitting device. Since the warning display portion illuminated by the third light emitting device is displayed in a lower edge, and the direction display portion illuminated by the fourth light emitting device is displayed in an upper edge, the warning display portion and the direction display portion are distinctive, and the visibility thereof is enhanced.

In the invention according to Claim 7, the first segment display portion and the second segment display portion are arranged between the circuit board and the warning display portion. On the basis of eyes of an observer such as an occupant, the warning display portion is slightly near the eyes, and the first and second segment display portions are slightly far from the eyes. The display having a rich stereoscopic effect can be achieved by the difference in distance.

### BRIEF EXPLANATION OF THE DRAWINGS

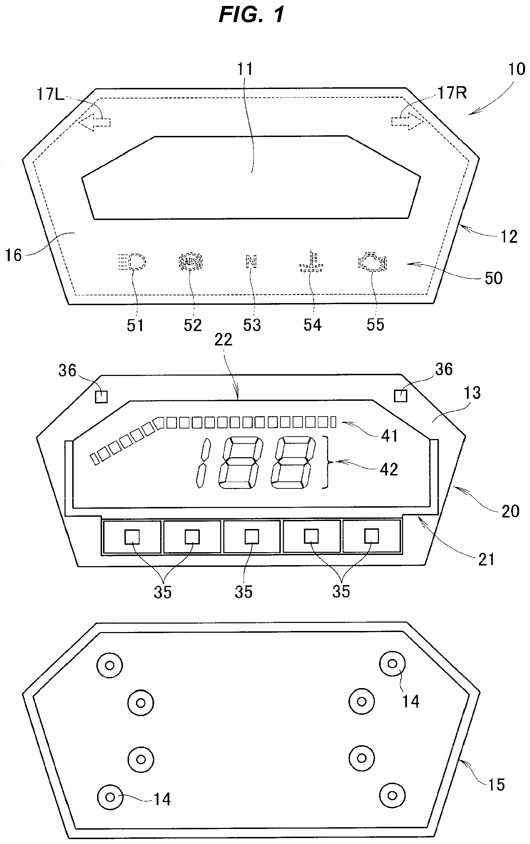

Fig. 1 is an exploded view (a front elevational view) of a vehicular display device according to the present invention;

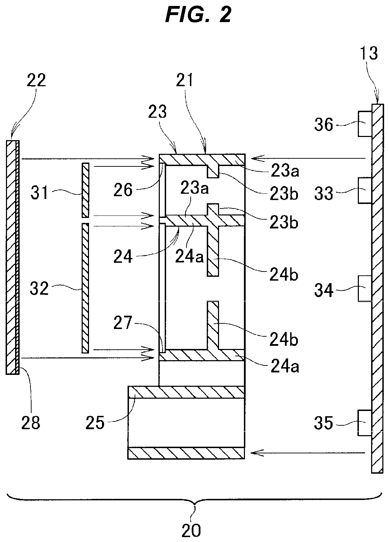

Fig. 2 is an exploded view of an assembly body;
Fig. 3 is an exploded view (a cross-sectional view) of the vehicular display device according to the present invention;
Fig. 4 is a cross-sectional view of the vehicular display device according to the present invention;

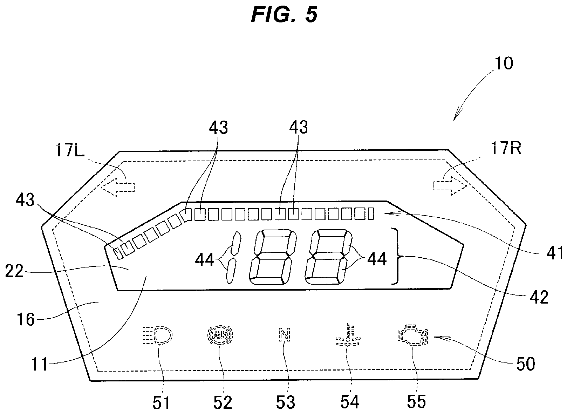

Fig. 5 is a view as seen from an arrow 5 in Fig. 4;

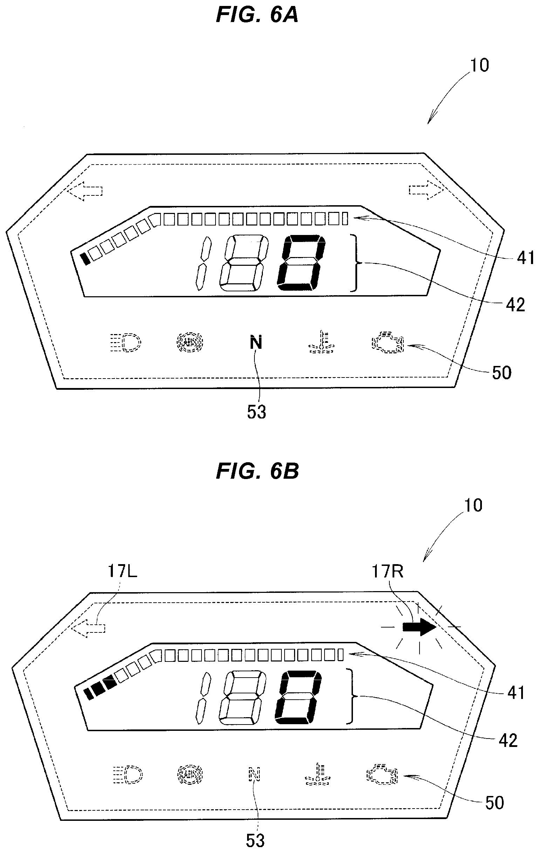

Figs. 6A and 6B are views describing a display example in the vehicular display device;

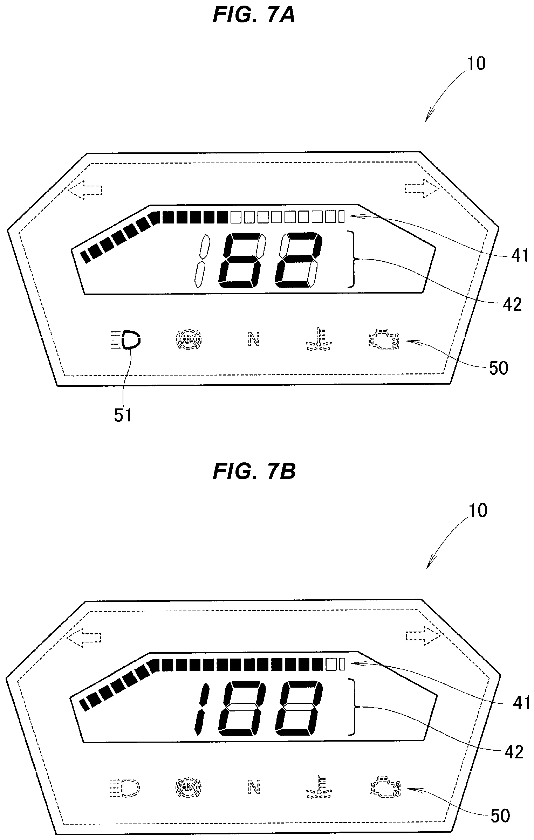

Figs. 7A and 7B are views describing a display example in the vehicular display device;

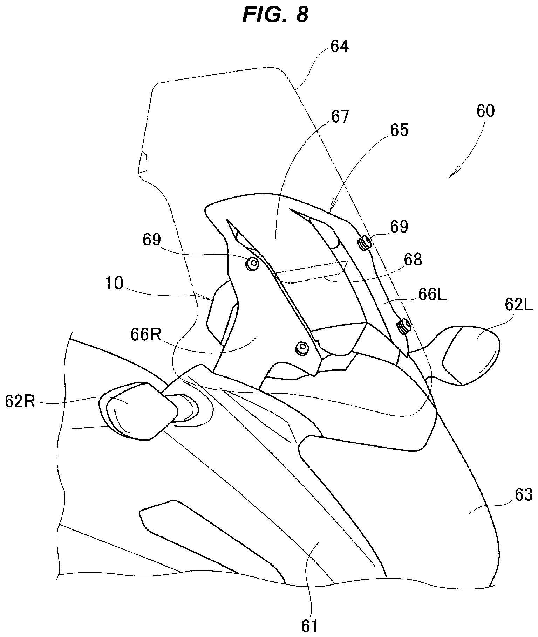

Fig. 8 is a perspective view of a front portion of a saddle riding type vehicle;

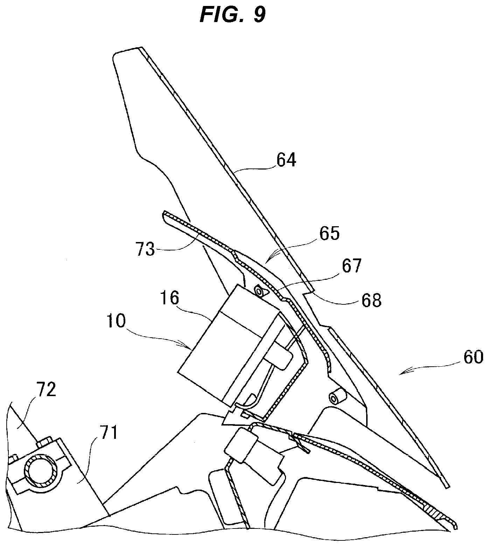

Fig. 9 is a cross-sectional view of the front portion of the saddle riding type vehicle; and
Figs. 10A and 10B are views describing a basic principle of the prior art.

### DETAILED DESCRIPTION OF PREFERRED EMBODIMENT

A description will be given below of an embodiment according to the present invention with reference to the accompanying drawings.

### Embodiment

As shown in Fig. 1, a vehicular display device 10 is provided with an upper case 12 which has a horizontally long see-through window 11, a lower case 15 which has a boss 14 receiving a circuit board 13, and an assembly body 20 which is housed between the upper case 12 and the lower case 15.

The upper case 12 has a display surface 16 which includes the see-through window 11. The display surface 16 is provided with a warning display portion 50 in a lower side of the drawing in the see-through window 11. In addition, the display surface 16 has a left arrow mark 17L (L is a subscript indicating left as seen from a driver, same applied to the below) which displays an actuation of a left direction indicator lamp and serves as a direction display portion in an upper left of the see-through window 11, and has a right arrow mark 17R (R is a subscript indicating right as seen from the driver, same applied to the below) which displays an actuation of a right direction indicator lamp and serves as a direction display portion in an upper right of the see-through window 11.

As shown in Fig. 2, the assembly body 20 is constructed by a middle case 21, a liquid crystal display panel 22 and the circuit board 13.

The middle case 21 is a resin molded product having a first light blocking wall 23 which is formed into a peripheral wall, a second light blocking wall 24 which is formed into a peripheral wall, and a third light blocking wall 25 which is formed into a peripheral wall, and is made of an opaque resin material for maintaining a light blocking effect.

Describing in detail a structure of the first light blocking wall 23 having the peripheral wall shape, the first light blocking wall 23 has a wall 23a which is perpendicular to the circuit board 13, and a parallel wall 23b which extends in parallel to the circuit board 13 from the middle of the perpendicular wall 23a.

Describing in detail of a structure of the second light blocking wall 24 having the peripheral wall shape in the same manner, the second light blocking wall 24 has a wall 24a which is perpendicular to the circuit board 13, and a parallel wall 24b which extends in parallel to the circuit board 13 from the middle of the perpendicular wall 24a.

A first frame portion 26 having a window frame shape is provided in one end of the first light blocking wall 23, and a first light diffuser panel 31 is fitted to the first frame portion 26.

A second frame portion 27 having a window frame shape is provided in one end of the second light blocking wall 24, and a second light diffuser panel 32 is fitted to the second frame portion 27.

A semi-transmissive and semi-reflective film 28 is affixed to a rear face of the liquid crystal display panel 22.

Further, the circuit board 13 is provided with a first light emitting device 33 at a position which is surrounded by the first light blocking wall 23, is provided with a second light emitting device 34 at a position which is surrounded by the second light blocking wall 24, is provided with a third light emitting device 35 at a position which is surrounded by the third light blocking wall 25, and is provided with a fourth light emitting device 36 at an outside position of the first light blocking wall 23.

The first light emitting device 33 is constructed by a multicolor LED (light emitting diode).

The second light emitting device 34, the third light emitting device 35 and the fourth light emitting device 36 are constructed by an inexpensive monochromatic LED.

The circuit board 13 is attached to the middle case 21. Further, the liquid crystal display panel 22 is attached to the middle case 21 while fitting the first light diffuser panel 31 to the first frame portion 26, and fitting the second light diffuser panel 32 to the second frame portion 27. As a result, the assembly body 20 shown at the center of Fig. 3 can be obtained.

As shown in Fig. 3, a peripheral wall portion 37 extends from the periphery of the display surface 16 to the lower case 15 side in the upper case 12. A black or gray light blocking layer 38 is formed by printing at the other positions than the see-through window 11 on a rear face of the display surface 16.

However, the warning display portion 50 is formed so as to have a significantly thin film thickness. In the same manner, the arrow marks 17L and 17R are formed so as to have significantly thin film thicknesses. The significantly thin film may be constructed by a semitransparent film having the same color as the light blocking layer 38.

As shown in Fig. 4, the vehicular display device 10 is provided with a housing 39 which is constructed by the upper case 12 and the lower case 15, the liquid crystal display panel 22 which is housed in the housing 39, and the circuit board 13 which is housed in the housing 39.

The circuit board 13 is provided with the first light emitting device 33 which can emit light with multiple colors, the second light emitting device 34 which emits light with a single color, the third light emitting device 35 which emits light with a single color, and the fourth light emitting device 36 which emits light with a single color.

The liquid crystal display panel 22 is provided with the semi-transmissive and semi-reflective film 28.

The housing 39 has a warning display portion 50, and the warning display portion 50 is transmitted and illuminated directly by the third light emitting device 35 (via no liquid crystal display panel 22).

As is apparent from the drawing, the sun light entering into the housing 39 after passing through the see-through window 11 is reflected by the semi-transmissive and semi-reflective film 28.

Further, the illumination by the first light emitting device 33 is diffused by the first light diffuser panel 31, passes through the semi-transmissive and semi-reflective film 28, and illuminates the liquid crystal display panel 22 (accurately a first segment display portion mentioned later). The illumination by the second light emitting device 34 is diffused by the second light diffuser panel 32, passes through the semi-transmissive and semi-reflective film 28 and illuminates the liquid crystal display panel 22 (accurately a second segment display portion mentioned later).

On the other hand, the illumination by the third light emitting device 35 directly illuminates the warning display portion 50. As a result, the warning display portion 50 is displayed with high luminance. Since the illumination by the fourth light emitting device 36 also illuminates the arrow marks 17L and 17R directly, the arrow marks 17L and 17R are displayed with high luminance.

As shown in Fig. 5, a main part of the liquid crystal display panel 22 can be seen through the see-through window 11. The substantial part of the liquid crystal display panel 22 is provided, for example, with a first segment display portion 41 which graphically displays such as a rotating speed of an engine, and is also provided with a second segment display portion 42 which displays a speed of a vehicle with a numerical value.

A graphic like a sequential line graph is constructed by linearly arranging display segments 43. The display segments 43 can be assumed as segments of a line, and the display portion having the aspect mentioned above is called as the first segment display portion 41.

In Arabic numerals, "1" is formed by arranging two I-character display segments 44 up and down, and 0 to 9 are formed by arranging seven I-character display segments 44. The I-character display segments 44 are assumed as segments of numeric characters, and the display portion having the aspect mentioned above is called as the second segment display portion 42.

The warning display portion 50 is constructed, for example, by a high beam mark 51, an ABS (antilock brake system) mark 52, a neutral mark 53, an overheat mark 54 and an engine abnormality mark 55. They are normally invisible as shown by broken lines. Same applies to the left and right arrow marks 17L and 17R serving as the direction display portions.

As shown in Fig. 4, the second light emitting device 34 is arranged in the lower position of the first light emitting device 33, the third emitting device 35 is arranged in the lower position of the second light emitting device 34, and the fourth light emitting device 36 is arranged in the upper position of the first light emitting device 33.

Then, the warning display portion 50 illuminated by the third light emitting device is displayed in a lower edge of the vehicular display device 10, and the left and right arrow marks 17L and 17R serving as the direction display portions illuminated by the fourth light emitting device are displayed in an upper edge, as shown in Fig. 5. As a result, the warning display portion 50 and the direction display portions 17L and 17R are distinctive, and the visibility thereof is enhanced.

Further, the perpendicular walls 23a and 24a come into contact with the circuit board 13 in their one ends, and come into contact with the liquid crystal display panel 22 in their other ends. The light emitted by the first light emitting device 33 can be prevented from leaking to the adjacent display portion (reference numeral 42 in Fig. 5), and the light emitted by the second light emitting device 34 can be prevented from leaking to the adjacent display portion (reference numeral 41 in Fig. 5) in the same manner.

Further, the perpendicular walls 23a and 24a are additionally provided with the walls 23b and 24b which are parallel to the circuit board 13, as shown in Fig. 4.

The light emitted by the first and second light emitting devices 33 and 34 passes through the semi-transmissive and semi-refletive 28 after being diffused by the first and second light diffuser panels 31 and 32, however, is partly reflected by the semi-transmissive and semi-refletive 28. The reflected light is reflected again by the parallel walls 23b and 24b, and is returned to the semi-transmissive and semi-refletive 28. As a result, the display luminance of the liquid crystal display panel 22 is improved.

Further, the liquid crystal display panel 22 is arranged between the circuit board 13 and the warning display portion 50 in Fig. 4. In other words, a distance H2 from the circuit board 13 to the warning display portion 50 is larger than a distance H1 from the circuit board 13 to the liquid crystal display panel 20 (H1 < H2).

As shown in Fig. 5, the liquid crystal display panel 22 has the first segment display portion 41 and the second segment display portion 42. The warning display portion 50 is arranged in a near side, and the first segment display portion 41 and the second segment display portion 42 are arranged in a far side of the drawing in comparison with the warning display portion 50. On the basis of the eyes of the observer, such as the occupant, the warning display portion 50 exists at a position which is slightly close to the eyes, and the first and second segment display portions 41 and 42 exist at positions which are slightly far from the eyes. The display which is rich in stereoscopic effect can be achieved owing to the difference in distance.

A description will be given next of an operation of the vehicular display device 10 having the structure mentioned above.

### <When main switch is turned on>

As shown in Fig. 6A, when the main switch is turned on from an off state, the first segment display portion 41 indicates that the rotating speed of the engine is zero. The second segment display portion 42 indicates that the speed of the vehicle is "0". In the warning display portion 50, the neutral mark 53 is lighted and the selection of the neutral gear is indicated.

### <When engine is started and start moving is prepared>

As shown in Fig. 6B, when the engine is started, the first segment display portion 41 indicates that the engine is in an idle rotating state. When the driver changes the gear to low position, the neutral mark 53 goes out. When the driver turns on a right blinker, the right arrow mark 17R blinks.

### <When vehicle normally travels>

As shown in Fig. 7A, when the vehicle changes to the normal travel, the first segment display portion 41 displays the rotating speed of the engine. The color of the first segment display portion 41 is set to a safety color (blue or green).

The second segment display portion 42 displays the speed of the vehicle.

In the case that the driver selects high beam, the high beam mark 51 comes to a lighting state. As shown in Fig. 4, the warning display portion 50 is illuminated by the third light emitting device 35 directly via no liquid crystal display panel 22. Therefore, the high beam mark 51 shown in Fig. 7A is displayed with high luminance, and can be easily viewed even under sun light. Same applies to the other warning display portion 50.

### <When engine rotating speed is abnormal>

If the gear ratio is erroneously selected under the high-speed traveling, the rotating speed of the engine may reach a critical rotating speed region.

As shown in Fig. 7B, the first segment display portion 41 lengthens fully and the display color changes from the safety color to a danger color (red). The driver immediately takes a step to decelerate the rotating speed of the engine.

In Fig. 7B, the first segment display portion 41 is set to the multicolor display, however, the second segment display portion 42 set to the inexpensive monochromatic display. Therefore, cost increase of the liquid crystal display panel 22 can be suppressed.

Next, a description will be given of an example in which the vehicular display device 10 is mounted to the vehicle.

As shown in Fig. 8, the vehicle is a saddle riding type vehicle 60 which the driver gets on in a riding manner. The saddle riding type vehicle 60 is provided with a front cowl 61 in a front portion, is provided with left and right direction indicator lamps 62L and 62R and a head lamp 63 in the front cowl 61, and is provided with a wind screen 64 shown by an imaginary line and a stay 65 supporting the wind screen 64.

The stay 65 is constructed by a pair of left and right rising portions 66L and 66R which rise up from an upper portion of the front cowl 61, and a bridging plate portion 67 which is bridged between a pair of rising portions 66L and 66R.

Further, the vehicular display device 10 is arranged in an area which is surrounded by the rising portions 66L and 66R and the bridging plate portion 67.

The wind screen 64 has an opening portion 68 in a lower portion at the center. The wind screen 64 is fastened to the rising portions 66L and 66R by fastening members 69 such as screws.

As shown in Fig. 9, a steering handle 72 is attached to a handle holder 71, the vehicular display device 10 is arranged in a vehicle forward side of the steering handle 72, the bridging plate portion 67 is arranged in a vehicle forward side of the vehicular display device 10, and the wind screen 64 is arranged in a front side of the bridging plate portion 67.

Traveling air flowing into from the opening portion 68 of the wind screen 64 is guided by a front face of the bridging plate portion 67.

Pressure receiving area of the wind screen 64 is reduced and the traveling resistance caused by the traveling air can be reduced, in the present embodiment having the opening portion 68, in comparison with the case that the opening portion 68 is not provided.

Further, vortex flow tends to be generated in an upper end of the wind screen 64. A part of the traveling air taken into from the opening portion 68 is raised on a back face of the wind screen 64 while being guided by the bridging plate portion 67. The vortex flow can be dissolved by the rising air flow.

The bridging plate portion 67 provided for the purpose mentioned above extends upward so as to cover the above of the vehicular display device 10 after covering the vehicle forward side of the vehicular display device 10, as shown in the drawing. The upper half portion of the bridging plate portion 67 doubles as a sun visor, that is, a small shield over motorcycle gauges 73. It is possible to inhibit the sun light from directly reaching the vehicular display device 10 by means of the small shield over motorcycle gauges 73.

The first segment display portion 41 may display an amount of fuel consumption in addition to the rotating speed of the engine. More specifically, the first segment display portion 41 is set to green when an economic drive is carried out, the first segment display portion 41 is set to red when an uneconomic drive is carried out, and the first segment display portion 41 is set to blue between them. As mentioned above, intended use of the first segment display portion 41 is optional.

### Industrial Applicability

The present invention is preferable for the vehicular display device including the liquid crystal display panel.
The invention provides an automotive display device which can achieve a colorful display and can achieve a warning display easily viewed even under sun light. A vehicular display device (10) has a housing (39), a liquid crystal display panel (22) which is housed in the housing (39), and a circuit board (13). The circuit board (13) has a first light emitting device (33) which can emit light with multiple colors, a second light emitting device (34) which emits light with a single color, a third light emitting device (35) which emits light with a single color, and a fourth light emitting device (36) which emits light with a single color. The liquid crystal display panel (22) has a semi-transmissive and semi-reflective film (28). The housing (39) has a warning display portion (50) which is transmitted and illuminated by the third light emitting device (35). Since the first light emitting device (33) can emit light with multiple colors, a colorful display can be achieved. Since illumination by the third light emitting device (35) illuminates the warning display portion (50) directly, the warning display portion (5) is displayed with high luminance, and is easily viewed even under sun light.

### Description of Reference Numerals

10 vehicular display device
13 circuit board
17L, 17R direction display portion (arrow mark)
22 liquid crystal display panel
28 semi-transmissive and semi-reflective film
33 first light emitting device
34 second light emitting device
35 third light emitting device
36 fourth light emitting device
39 housing
41 first segment display portion
42 second segment display portion
50 warning display portion
60 saddle riding type vehicle
64 wind screen
72 steering handle
73 small shield over motorcycle gauges

## Claims

1. A vehicular display device (10) comprising:
a housing (39);
a liquid crystal display panel (22) which is housed in the housing (39); and
a circuit board (13) which is housed in said housing (39),
wherein said circuit board (13) is provided with a first light emitting device (33) which can emit light with multiple colors, a second light emitting device (34) which emits light with a single color, and a third light emitting device (35) which emits light with a single color,
wherein said liquid crystal display panel (22) is provided with a semi-transmissive and semi-reflective film (28), and has a first segment display portion (41) which is transmitted and illuminated by said first light emitting device (33), and a second segment display portion (42) which is transmitted and illuminated by said second light emitting device (34), **characterized in that**
said housing (39) has a warning display portion (50) which is transmitted and illuminated by said third light emitting device (35).

2. The vehicular display device (10) according to claim 1, wherein said first segment display portion (41) indicates a rotating speed of an engine, and
wherein said second segment display portion (42) indicates a speed of the vehicle.

3. The vehicular display device (10) according to claim 1 or 2, wherein the vehicular display device (10) is provided in a saddle riding type vehicle.

4. The vehicular display device (10) according to claim 3, wherein said vehicular display device (10) is provided in a forward side of a steering handle (72) of said saddle riding type vehicle and a rearward side of a wind screen (64).

5. The vehicular display device (10) according to claim 3 or 4, wherein said vehicular display device (10) is provided with a small shield (73) over motorcycle gauges which prevents direct projection of sun light.

6. The vehicular display device (10) according to claim 1, wherein said circuit board (13) further comprises a fourth light emitting device (36) which emits light with a single color,
wherein said housing (39) further has a direction display portion (17L, 17R) which is transmitted and illuminated by said fourth light emitting device (36), and
wherein said second light emitting device (34) is arranged at a lower position of said first light emitting device (33), said third light emitting device (35) is arranged at a lower position of the second light emitting device (34), and the fourth light emitting device (36) is arranged at an upper position of said first light emitting device (33).

7. The vehicular display device (10) according to claim 1, wherein said liquid crystal display panel (22) having said first segment display portion (41) and said second segment display portion (42) is arranged between said circuit board (13) and said warning display portion (50).

## Patentansprüche

1. Fahrzeuganzeigevorrichtung (10) mit:
einem Gehäuse (39);
einer Flüssigkristallanzeigetafel (22), die in dem Gehäuse (39) untergebracht ist; und
einer Schalttafel (13), die in dem Gehäuse (39) untergebracht ist,
wobei die Schalttafel (13) mit einer ersten Lichtemittiervorrichtung (33), die Licht mit vielen Farben emittieren kann, einer zweiten Lichtemittiervorrichtung (34), die Licht mit einer einzelnen Farbe emittiert, und einer dritten Lichtemittiervorrichtung (35) versehen ist, die Licht mit einer einzelnen Farbe emittiert,
wobei die Flüssigkristallanzeigetafel (22) mit einem halbdurchsichtigen und halbreflektierenden Film (28) versehen ist und einen ersten Segmentanzeigeabschnitt (41), der durch die erste Lichtemittiervorrichtung (33) übermittelt und beleuchtet wird, und einen zweiten Segmentanzeigeabschnitt (42) hat, der durch die zweite Lichtemittiervorrichtung (34) übermittelt und beleuchtet wird,
**dadurch gekennzeichnet, dass**
das Gehäuse (39) einen Warnanzeigeabschnitt (50) hat, der durch die dritte Lichtemittiervorrichtung (35) übermittelt und beleuchtet wird.

2. Fahrzeuganzeigevorrichtung (10) gemäß Anspruch 1, wobei der erste Segmentanzeigeabschnitt (41) eine Drehzahl eines Verbrennungsmotors anzeigt, und
wobei der zweite Segmentanzeigeabschnitt (42) eine Geschwindigkeit des Fahrzeugs anzeigt.

3. Fahrzeuganzeigevorrichtung (10) gemäß Anspruch 1 oder 2, wobei die Fahrzeuganzeigevorrichtung (10) in einem Fahrzeug der Art, die im Sattel gefahren wird, vorgesehen ist.

4. Fahrzeuganzeigevorrichtung (10) gemäß Anspruch 3, wobei die Fahrzeuganzeigevorrichtung (10) an einer vorderen Seite einer Lenkgabel (72) des Fahrzeugs der Art, die im Sattel gefahren wird, und an einer rückwärtigen Seite einer Frontscheibe (64) vorgesehen ist.

5. Fahrzeuganzeigevorrichtung (10) gemäß Anspruch 3 oder 4, wobei die Fahrzeuganzeigevorrichtung (10) mit einer kleinen Abschirmung (73) über Motorradanzeigen versehen ist, die eine direkte Einstrahlung von Sonnenlicht verhindert.

6. Fahrzeuganzeigevorrichtung (10) gemäß Anspruch 1, wobei die Schalttafel (13) des Weiteren eine vierte Lichtemittiervorrichtung (36) aufweist, die Licht mit einer einzelnen Farbe emittiert,
wobei das Gehäuse (39) des Weiteren einen Richtungsanzeigeabschnitt (17L, 17R) hat, der durch die vierte Lichtemittiervorrichtung (36) übermittelt und beleuchtet wird, und
wobei die zweite Lichtemittiervorrichtung (34) an einer unteren Position der ersten Lichtemittiervorrichtung (33) angeordnet ist, die dritte Lichtemittiervorrichtung (35) an einer unteren Position der zweiten Lichtemittiervorrichtung (34) angeordnet ist, und die vierte Lichtemittiervorrichtung (36) an einer oberen Position der ersten Lichtemittiervorrichtung (33) angeordnet ist.

7. Fahrzeuganzeigevorrichtung (10) gemäß Anspruch 1, wobei die Flüssigkristallanzeigetafel (22), die den ersten Segmentanzeigeabschnitt (41) und den zweiten Segmentanzeigeabschnitt (42) hat, zwischen der Schalttafel (13) und dem Warnanzeigeabschnitt (50) angeordnet ist.

## Revendications

1. Dispositif d'affichage pour véhicule (10) comprenant :
un boîtier (39) ;
un panneau d'affichage à cristaux liquides (22) qui est logé dans le boîtier (39) ; et
une carte de circuits imprimés (13) qui est logée dans ledit boîtier (39),
dans lequel ladite carte de circuits imprimés (13) est dotée d'un premier dispositif d'émission de lumière (33) qui peut émettre de la lumière avec de multiples couleurs, un deuxième dispositif d'émission de lumière (34) qui émet de la lumière avec une seule couleur, et un troisième dispositif d'émission de lumière (35) qui émet de la lumière avec une seule couleur,
dans lequel ledit panneau d'affichage à cristaux liquides (22) est doté d'un film semi-transmissif et semi-réflectif (28), et présente une première portion d'affichage de segment (41) qui est transmise et éclairée par ledit premier dispositif d'émission de lumière (33), et une seconde portion d'affichage de segment (42) qui est transmise et éclairée par ledit deuxième dispositif d'émission de lumière (34),
**caractérisé en ce que**
ledit boîtier (39) présente une portion d'affichage d'avertissement (50) qui est transmise et éclairée par ledit troisième dispositif d'émission de lumière (35).

2. Dispositif d'affichage pour véhicule (10) selon la revendication 1, dans lequel ladite première portion d'affichage de segment (41) indique une vitesse de rotation d'un moteur, et
dans lequel ladite seconde portion d'affichage de segment (42) indique une vitesse du véhicule.

3. Dispositif d'affichage pour véhicule (10) selon la revendication 1 ou 2, dans lequel le dispositif d'affichage pour véhicule (10) est prévu dans un véhicule du type à enfourcher.

4. Dispositif d'affichage pour véhicule (10) selon la revendication 3, dans lequel ledit dispositif d'affichage pour véhicule (10) est prévu dans un côté avant d'un guidon de pilotage (72) dudit véhicule du type à enfourcher et un côté arrière d'un pare-brise (64).

5. Dispositif d'affichage pour véhicule (10) selon la revendication 3 ou 4, dans lequel ledit dispositif d'affichage pour véhicule (10) est doté d'un petit élément de protection (73) sur des jauges de motocyclette qui empêche une projection directe de lumière du soleil.

6. Dispositif d'affichage pour véhicule (10) selon la revendication 1, dans lequel ladite carte de circuits imprimés (13) comprend en outre un quatrième dispositif d'émission de lumière (36) qui émet de la lumière avec une seule couleur,
dans lequel ledit boîtier (39) présente en outre une portion d'affichage de direction (17L, 17R) qui est transmise et éclairée par ledit quatrième dispositif d'émission de lumière (36), et
dans lequel ledit deuxième dispositif d'émission de lumière (34) est agencé sur une position inférieure dudit premier dispositif d'émission de lumière (33), ledit troisième dispositif d'émission de lumière (35) est agencé sur une position inférieure du deuxième dispositif d'émission de lumière (34), et le quatrième dispositif d'émission de lumière (36) est agencé sur une position supérieure dudit premier dispositif d'émission de lumière (33).

7. Dispositif d'affichage pour véhicule (10) selon la revendication 1, dans lequel ledit panneau d'affichage à cristaux liquides (22) présentant ladite première portion d'affichage de segment (41) et ladite seconde portion d'affichage de segment (42) est agencé entre ladite carte de circuits imprimés (13) et ladite portion d'affichage d'avertissement (50).
